# EUROPÄISCHE PATENTSCHRIFT

(11) **EP 0 819 514 B1**
(45) Veröffentlichungstag und Bekanntmachung des Hinweises auf die Patenterteilung: **08.08.2001**
(21) Anmeldenummer: 97110908.7
(22) Anmeldetag: 02.07.1997
(51) Int. Cl.: B29C 65/20

(54) **Vorrichtung zum Verbinden von Profilen aus Kunststoff**
Device for joining profiled plastic elements together
Dispositif pour relier des profilés en matières plastique

(30) Priorität: 20.07.1996 DE 19629302
(43) Veröffentlichungstag der Anmeldung: 21.01.1998
(73) Patentinhaber: Wilhelm Hollinger Maschinenbau GmbH, 66953 Pirmasens (DE)
(72) Erfinder: Hollinger, Paul, 66953 Pirmasens (DE); Chini, Werner, 66976 Rodalben (DE)
(74) Vertreter: Lempert, Jost, Dipl.-Phys. Dr. rer.nat.

(56) Entgegenhaltungen:
- EP-A- 0 531 681
- EP-A- 0 678 374
- WO-A-96/06723

## Beschreibung

Die Erfindung betrifft eine Vorrichtung zum Verbinden von Profilen aus Kunststoff, insbesondere für Fenster-, Blendrahmen o. dgl., durch Schweißen mit mindestens zwei, vorzugsweise vier Schweißaggregaten, die jeweils zwei Schlitten, einen ortsfesten und einen relativ hierzu verfahrbaren, und einen beweglichen Profilanschlag zum Ausrichten der eingelegten Profile aufweisen.

Die Herstellung von Fensterrahmen, Blendrahmen o. dgl. aus Kunststoffprofilen erfolgt durch Verschweißen von Profilstücken. Bei einer sogenannten Vier-Kopf- bzw. Vierstellen-Schweißmaschine werden vier Profilstücke gleichzeitig mittels vier Schweißaggregaten verschweißt. (vgl. EP-A-0 678 374.) Grundsätzlich sind jeweils zwei Schweißaggregate auf einem Aggregatträger angeordnet, von denen zwei gegebenenfalls parallel sind. Ein Aggregatträger ist fest mit dem Untergestell der Schweißmaschine verschraubt, während ein zweiter quer zum ersten verfahrbar ist, um beispielsweise unterschiedliche Fensterbreiten zu verschweißen. Auf jedem der Aggregatträger ist ein Schweißaggregat fest montiert, während das zweite Aggregat über den Träger verfahrbar ist, um beispielsweise unterschiedliche Fensterhöhen zu verschweißen. Das Schweißaggregat selbst besteht aus einem ortsfesten Schlitten, der fest mit dem Schweißaggregat verbunden ist, sowie einem beweglichen Schlitten, der die Arbeitsbewegungen beim Einrichten, Schmelzen und Stauchen der PVC-Profile durchführt. Des weiteren sind auf dem Schweißaggregat jeweils ein Profilanschlag zum Ausrichten der Profile, der Schweißspiegel zum Anschmelzen der Profilstirnseiten sowie Spanneinheiten zum Fixieren der Profile in der Schweißmaschine vorhanden.

Der Ausrichtvorgang vor dem Verschweißen der Profile in einer solchen Schweißmaschine ist wie folgt: Nachdem die Profile in die Schweißmaschine eingelegt sind, fährt die Schweißmaschine mittels ihres beweglichen Aggregatträgers sowie der beiden beweglichen Schweißaggregate in ihre sogenannte Sollmaßposition. Um nun die Kunststoffprofile zwischen den Profilanschlägen auszurichten, wird das jeweils auf zwei beweglichen Schlitten aufliegende Profil mittels dieser Schlitten in Richtung der auf den ortsfesten Schlitten aufliegenden Profile bewegt. Dabei wird gleichzeitig der Profilanschlag mittels der beweglichen Schlitten bzw. des so bewegten Profils in Richtung der Stirnseiten der festen Profile mitbewegt.

Auf dem beweglichen und dem ortsfesten Schlitten eines jeweiligen Schweißaggregates ist dabei ein Anschlag für den Profilanschlag angeordnet, so daß die Bewegung zur Ausrichtung der Profile zwischen den Profilanschlägen entweder dadurch beendet wird, daß die Profilanschläge durch Anlage an den Anschlägen in ihre Endstellung gelangen oder aber die beweglichen Profile mit ihren zu verschweißenden Stirnseiten unter Zwischenlage der Profilanschläge an den Stirnseiten der ortsfesten Profile zur Anlage kommen. Das Ausrichten erfolgt dabei jeweils durch die zwei zu einem Profil gehörenden Profilanschläge. Anschließend werden die Profile im Schweißaggregat mittels der Spanneinheiten fixiert. Nachteilig hierbei ist jedoch, daß Fertigungstoleranzen, die beim Zuschnitt der Profile auf die gegebenen Längen entstehen, nicht berücksichtigt werden. Hierdurch verschlechtert sich die Qualität der Schweißverbindung, so daß die Fenster- oder Blendrahmen sogenannte "schlechte Ecken" aufweisen können. Diese ergeben sich dadurch, daß die Toleranzen bei herkömmlichen Vier-Kopf-Schweißmaschinen nicht über den gesamten zu erstellenden Rahmen verteilt werden können.

Der Erfindung liegt daher die Aufgabe zugrunde, eine Vorrichtung der eingangs genannten Art derart weiterzubilden, daß die Profile unabhängig von ihrer Zuschnittgenauigkeit bei gleichzeitiger Überprüfung ihrer Profillänge symmetrisch zu den Schweißaggregaten ausgerichtet werden können.

Erfindungsgemäß wird die genannte Aufgabe durch eine Vorrichtung der eingangs genannten Art dadurch gelöst, daß für jeden Profilanschlag eine am zugehörigen Schweißaggregat angeordnete, den Profilanschlag jeweils jedem der gegenüber dem Schweißaggregat auszurichtenden Profile einzeln zustellende und von diesem wegbewegende Zentriereinrichtung zum Zentrieren der Profile vorgesehen ist.

Die Erfindung kann grundsätzlich bei einer Zweistellen-Schweißmaschine eingesetzt werden, bei der ein mittleres Profil mit seinen Enden mit zwei weiteren verbunden wird, um so das mittlere Profil zu zentrieren. Die Erfindung wird aber vorzugsweise bei einer Vierstellen-Schweißmaschine eingesetzt, bei der sich ihre Vorteile voll entfalten.

Durch die erfindungsgemäße Zentriereinrichtung erfolgt also das Ausrichten der Profile nicht erst beim Zusammenfahren der Schlitten, sondern bereits vorher. Dabei werden nicht, wie beim Stand der Technik, alle Profile, also sowohl die ortsfesten als auch die durch die Schlitten bewegten, gleichzeitig ausgerichtet, sondern es ist durch die erfindungsgemäße Zentriereinrichtung möglich, diesen Zentrier- und Ausrichtvorgang jeweils einzeln einmal für die auf den ortsfesten Schlitten angeordneten Profile und zum anderen für die auf den beweglichen Schlitten angeordneten Profile durchzuführen. Gleichzeitig ist es hierdurch möglich, jedes Profil bezüglich seiner Maßgenauigkeit sowie relativen Lage zum jeweiligen Schweißaggregat zu überprüfen. Aufgrund der erfindungsgemäßen Ausgestaltung kann dann eine Korrektur bezüglich Zentrierung und Ausrichtung der Profile erfolgen, so daß sich die Profiltoleranzen gleichmäßiger auf alle Ecken des zu bildenden Rahmens verteilen. Erst dann werden die Profile über die Spanneinheiten fixiert und der eigentliche Schweißvorgang eingeleitet. Auch ist es möglich, Profile auszutauschen, wenn eine zu hohe Abweichung der Profillänge von der vorgegebenen Länge ermittelt wird.

Bevorzugt sind die Zentriereinrichtungen synchron betätigbar. Auf diese Weise ist sichergestellt, daß die Profilanschläge gleichmäßig an die auszurichtenden Profile angedrückt werden, so daß die Profile zum einen immer zu den Schweißaggregaten zentriert werden. Wenn in bevorzugter Ausgestaltung vorgesehen ist, daß die Zentriereinrichtungen eine Meßeinrichtung zum Messen der Zentriergenauigkeit und Profillänge aufweisen, ist auch sogleich ein Vergleich der Meßwerte an allen vier Schweißaggregaten möglich, um unterhalb bzw. oberhalb vorgegebener Toleranzen liegende Unter- bzw. Überlängen einzelner Profile zu erkennen. Ein solches Profil kann dann vor dem Schweißen ausgetauscht werden.

In bevorzugter Ausgestaltung ist vorgesehen, daß die Zentriereinrichtung einen Zylinder aufweist, der über seine heb- und senkbare Kolbenstange mit einem am Profilanschlag festgelegten Gehäuse verbunden ist. Der Zylinder ist dabei vorzugsweise pneumatisch beaufschlagt. Aufgrund dieser erfindungsgemäßen Ausgestaltung können die Profilanschläge definiert beiden zu einem Schweißaggregat gehörenden Profilen zugestellt und nach erfolgtem Zentrieren und gegebenenfalls Vermessen von diesen wegbewegt werden. Der Zylinder ist dabei vorzugsweise am ortsfesten Schlitten festgelegt.

In Weiterbildung ist vorgesehen, daß die Kolbenstange innerhalb des Gehäuses durch einen sie umgebenden Bund verschiebbar abgestützt ist. Hierdurch wird einerseits dafür gesorgt, daß das Gehäuse und damit der Profilanschlag bei definiertem Anheben und Senken der Kolbenstange dem jeweils auszurichtenden Profil zugestellt und an dieses angedrückt wird, andererseits kann sich die Kolbenstange relativ zum Gehäuse und damit auch zum Profilanschlag verschieben, wenn der Profilanschlag bereits vor Beendigung des Hub- bzw. Senkvorgangs am auszurichtenden Profil anliegt. Um die Bewegung der Kolbenstange auf den Profilanschlag übertragen zu können, ist die Kolbenstange vorzugsweise beidseits des Bundes von sich am Bund abstütztenden Druckfedern umgeben. Dadurch, daß die Federn beidseits des Bundes angeordnet sind, kann so sowohl die Hebe- als auch die Senkbewegung der Kolbenstange durch Beaufschlagung des Zylinders zur Ausrichtung beider Profile eines Schweißaggregates optimal auf das Gehäuse und damit den Profilanschlag übertragen werden.

Um nun die Profilanschläge an allen vier Ecken gleichzeitig und gleichmäßig an die Profile mittels Druckbeaufschlagung des Zylinders durch definierten Hub der Kolbenstange andrücken zu können, wobei dann jeweils zwei einander gegenüberliegende Profile von zwei Seiten durch die Federkraft der Druckfedern belastet werden, ist bevorzugt vorgesehen, daß die auf der dem Zylinder abgewandten Seite des Bundes angeordneten Druckfedern aller Einrichtungen zum Zentrieren und Messen die gleiche Federkonstante aufweisen. Gleiches gilt für die auf der dem Zylinder zugewandten Seite des Bundes angeordneten Druckfedern. Auf diese Weise ist das Profil jeweils zwischen zwei Federn gleicher Federraten eingeklemmt und wird immer zu den Schweißaggregaten zentriert.

Um jeweils beide zu einem Schweißaggregat gehörenden Profile ausrichten und zentrieren zu können, ist in Weiterbildung vorgesehen, daß der Bund ohne Druckbeaufschlagung des Zylinders in etwa mittig im Gehäuse angeordnet ist. Gleichermaßen befindet sich der Kolben des Zylinders ohne Druckbeaufschlagung des Zylinders in seiner Mittellage im Zylinder. Hierdurch ist sichergestellt, daß jeweils eine definierte und gleiche Hub- bzw. Senkbewegung der Kolbenstange durch Druckbeaufschlagung des Zylinders in der einen oder anderen Richtung und so ein gleichmäßiges Ausrichten und Zentrieren der Profile möglich ist.

Damit mittels der Meßeinrichtung sowohl festgestellt werden kann, ob das auszurichtende Profil zu lang oder aber zu kurz ist, ist in bevorzugter Ausgestaltung vorgesehen, daß der Abstand zwischen den Profilen und Profilanschlägen in der Sollmaßstellung der Vorrichtung vor dem Ausrichten der Profile und der Druckbeaufschlagung des Zylinders geringer als der Hub des Kolbens im Zylinder bei Druckbeaufschlagung ist. Hierdurch werden die Druckfedern bei Sollänge des Profils in jedem Fall etwas zusammengedrückt. Weist das Profil diese Sollänge sowie gegebenenfalls zulässige Toleranzen nicht auf, so wird die Feder gegenüber der Sollänge mehr oder weniger stark zusammengedrückt. Dieser Mehr- oder Minderweg der Zylinderstange gegenüber dem Gehäuse und damit dem Profilanschlag kann dann zur Überprüfung der Profillänge genutzt werden. Hierzu ist in Weiterbildung vorgesehen, daß die Kolbenstange das Gehäuse durchragt. Entsprechend kann dann das aus dem Gehäuse herausragende Ende der Kolbenstange, dessen Länge von der Profillänge abhängt, zur Vermessung der Profile herangezogen werden. Vorzugsweise ist dabei die Meßeinrichtung durch ein Linearpotentiometer mit einem mit dem dem Zylinder abgewandten Ende der Kolbenstange verbundenen Schleifkontakt gebildet. Linearpotentiometer und ihre Eigenschaften sind bekannt. Dadurch, daß das dem Zylinder abgewandte Ende der Kolbenstange je nach Profillänge und damit dem Mehr- oder Minderweg der Kolbenstange gegenüber dem Profilanschlag sowie dem Gehäuse mehr oder weniger aus dem Gehäuse herausragt, wird so bei geeigneter Verbindung zwischen dem Ende und dem Schleifkontakt ein jeweils bei unterschiedlicher Profillänge unterschiedlicher Widerstand am Linearpotentiometer abgegriffen. Dementsprechend ist es möglich, der Sollänge des Profils sowie der zulässigen Längentoleranz Sollwiderstände zuzuordnen. Durch die Linearverschiebung der Kolbenstange ist es dann außerdem möglich, entsprechende Widerstandsbereiche zu bestimmen, bei deren Abgriff die Aussage möglich ist, ob das Profil zu lang oder zu kurz ist. Es ist also nicht nur eine "gut/schlecht"-Erkennung möglich, sondern auch eine Aussage darüber, an welcher Einrichtung zum Messen und Zentrieren ein zu langes oder zu kurzes Profil vorliegt. Das Linearpotentiometer ist dabei vorzugsweise am Gehäuse festgelegt. Dementsprechend kann die genaue Relativverschiebung zwischen Kolbenstange und Gehäuse durch Abgriff am Linearpotentiometer erfaßt werden.

Damit eine genaue Aussage darüber möglich ist, ob die auszurichtenden, zu zentrierenden und zu vermessenden Profile innerhalb der zulässigen Längentoleranz liegen, welche Profile an welchem Schweißaggregat aus diesem Toleranzbereich herausfallen und wie genau die Profile relativ zur Vorrichtung an allen Schweißaggregaten zentriert sind, ist in bevorzugter Ausgestaltung vorgesehen, daß die Linearpotentiometer aller Schweißaggregate mit zumindest einer Einrichtung zur Auswertung und Verarbeitung der gemessenen Daten und zur Ausgabe von Fehlermeldungen verbunden ist. In dieser Einrichtung können dann Vorgabewerte für die optimale Profillänge sowie die zulässige Längentoleranz gespeichert sein, um diese dann mit den am jeweiligen Linearpotentiometer abgegriffenen Werten zu vergleichen. Liegt ein Profil außerhalb dieses Toleranzbereiches, erfolgt eine entsprechende Meldung, welches Profil entsprechend der abgegriffenen Widerstandswerte zu kurz oder zu lang ist. Durch Vergleichen der Wege der Linearpotentiometer an allen Schweißaggregaten kann dann mittels der Einrichtung die Zentriergenauigkeit der Profile relativ zur Vorrichtung ermittelt werden. Diese Zentriergenauigkeit kann ebenfalls genau vorgegeben sein, so daß bei Abweichungen eine entsprechende Fehlermeldung ausgegeben wird. Auf diese Weise ist es möglich, daß die Profile erst bei korrekter Zentrierung bzw. korrekter Profillänge über die Spanneinheiten fixiert und der eigentliche Schweißvorgang eingeleitet wird.

Die Vorrichtung zum Verbinden der Profile ist bevorzugt derart ausgebildet, daß bei vier Schweißaggregaten jeweils zwei auf einem von zwei parallel zueinander angeordneten Aggregatträgern angeordnet sind, wobei jeweils ein Schweißaggregat eines Paares relativ zum anderen auf dem Aggregatträger und ein Aggregatträger relativ zum anderen Träger verstellbar sind. Auf diese Weise können die Schweißaggregate nach Einlegen der Profile optimal in ihre Sollmaßstellung gefahren werden, und es ist möglich, mittels dieser Vorrichtung Rahmen unterschiedlicher Breite und Höhe zu fertigen. Entsprechend weist jedes Schweißaggregat ein zwischen die Stirnflächen zweier zu verbindender Profile einführbares Heizschwert sowie die miteinander zu verschweißenden Profile aufnehmende und fixierende Spanneinheiten auf.

Insgesamt ist so eine Vorrichtung geschaffen, mittels der Kunststoffprofile insbesondere in Vier-Kopf-Schweißmaschinen bezüglich ihrer Zentriergenauigkeit bzw. Profillänge überprüft werden können, so daß eine Verteilung der Profiltoleranzen gleichmäßiger auf alle Ecken des zu bildenden Rahmens möglich ist und so auf jeden Fall bessere Schweißergebnisse erzielt werden. Auch können Profile, die außerhalb der zulässigen Toleranzwerte liegen, ausgetauscht werden, da eine entsprechende Fehlermeldung ausgegeben wird.

Weitere Vorteile und Merkmale der Erfindung ergeben sich aus den Ansprüchen und aus der nachfolgenden Beschreibung, in der ein Ausführungsbeispiel unter Bezugnahme auf die Zeichnungen im einzelnen erläutert ist. Dabei zeigt:
- Fig. 1: eine Draufsicht auf eine erfindungsgemäße Vorrichtung als Vierstellen-Schweißmaschine ohne Druckbeaufschlagung der Zylinder;
- Fig. 2: die Vorrichtung aus Fig. 1 bei druckbeaufschlagten Zylindern;
- Fig. 3: einen vergrößerten Ausschnitt aus Fig. 2; und
- Fig. 4 + 5: Prinzipdarstellungen zur Verdeutlichung der Funktionsweise der erfindungsgemäßen Vorrichtung.

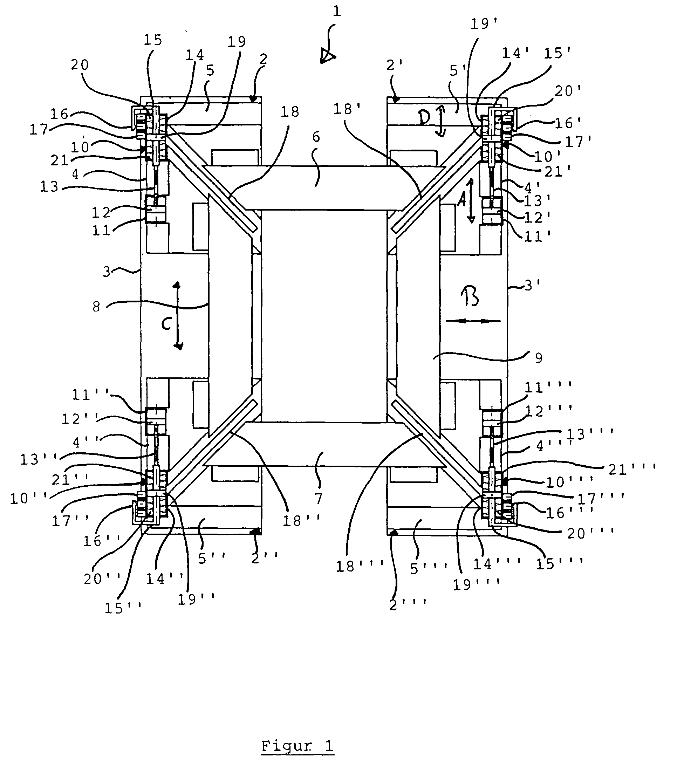

Die in den Figuren 1 bis 3 dargestellte erfindungsgemäße Vorrichtung 1 in Form einer Vierstellen-Schweißmaschine weist auf einem in den Figuren nicht dargestellten Maschinengestell vier Schweißaggregate, 2, 2', 2'', 2''' auf. Die Schweißaggregate 2, 2', 2'', 2''' sind dabei auf bekannte Weise jeweils gleichmäßig an vier Ecken des Maschinengestells angeordnet. Jeweils zwei der vier Schweißaggregate 2, 2'' bzw. 2', 2''' sind auf einem von zwei parallelen Aggregatträgern 3, 3' angeordnet, wobei der Aggregatträger 3' in Richtung des Doppelpfeiles B relativ zum anderen Aggregatträger 3 verstellbar ist, um unterschiedliche Rahmenbreiten zu verschweißen. Der Aggregatträger 3 ist fest mit dem Untergestell verschraubt. Auf jedem dieser Aggregatträger 3, 3' ist ein Schweißaggregat 2'', 2''' fest montiert, während das andere Schweißaggregat 2, 2' auf dem jeweils zugehörigen Aggregatträger 3, 3' in Richtung des Doppelpfeiles C verfahrbar ist, um beispielsweise Rahmen unterschiedlicher Höhe zu verschweißen. Jedes Schweißaggregat 2, 2', 2'', 2''' besteht aus einem festen Schlitten 4, 4', 4'', 4''', der fest mit dem Schweißaggregat verbunden ist, sowie einem beweglichen Schlitten 5, 5', 5'', 5''', der in Richtung des Doppelpfeiles D in Richtung des ortsfesten Schlittens 4, 4', 4'', 4''' verfahrbar ist, damit die Profile eingerichtet, angeschmolzen und gestaucht werden können. Des weiteren ist auf jedem Schweißaggregat 2, 2', 2'', 2''' jeweils ein nicht dargestelltes Heizschwert zum Anschmelzen der Profilstirnseiten sowie Spanneinheiten zum Fixieren der Profile in der Vorrichtung vorhanden.

In die in Fig. 1 dargestellte Vorrichtung 1 sind jeweils vier Profile 6, 7, 8, 9 eingelegt, die jeweils mit ihren Enden 6', 6'', 7', 7'', 8', 8'', 9', 9'' auf einem der Schlitten 4, 4', 4'', 4''', 5, 5', 5'', 5''' der Schweißaggregate 2, 2', 2'', 2''' aufliegen. Wie aus Fig. 1 ersichtlich ist, liegt dabei das Profil 6 mit seinen Enden 6', 6'' auf den beweglichen Schlitten 5, 5' der einander gegenüberliegenden Schweißaggregate 2, 2' auf, das Profil 8 mit seinen Enden 8', 8'' auf den ortsfesten Schlitten 4, 4'' der Schweißaggregate 2, 2'', das Profil 7 mit seinen Enden 7'', 7' auf den beweglichen Schlitten 5'', 5''' der Schweißaggregate 2'', 2''' und das Profil 9 mit seinen Enden 9', 9'' auf den ortsfesten Schlitten 4''', 4' der Schweißaggregate 2''', 2'. Entsprechend können die Profile 6, 7 mittels der beweglichen Schlitten 5, 5', 5'', 5''' in Richtung der auf den ortsfesten Schlitten aufliegenden Profile 8, 9 verfahren werden, um die Arbeitsbewegungen des Einrichtens, Schmelzens und Stauchens der bevorzugt aus Kunststoff bestehenden Profile durchzuführen.

An jedem Schweißaggregat 2, 2', 2'', 2''' ist eine Zentriereinrichtung zum Zentrieren der Profile 10, 10', 10'', 10''' angeordnet. Diese Zentriereinrichtung 10, 10', 10'', 10''' erstreckt sich jeweils in Längsrichtung der Aggregatträger 3, 3' und weist einen druckbeaufschlagten Zylinder 11, 11', 11'', 11''' auf, der jeweils am ortsfesten Schlitten 4, 4', 4'', 4''' des zugehörigen Schweißaggregates 2, 2', 2'', 2''' festgelegt ist. Jeder Zylinder 11, 11', 11'', 11''' ist in üblicher Weise mit einem Kolben 12, 12', 12'', 12''' sowie einer sich im dargestellten Ausführungsbeispiel in Richtung des beweglichen Schlittens 5, 5', 5'', 5''' erstreckenden Kolbenstange 13, 13', 13'', 13''' versehen. Der Kolben 12, 12', 12'', 12''' befindet sich ohne Druckbeaufschlagung des Zylinders 11, 11', 11'', 11''' mittig innerhalb von diesem, um Bewegungen in beide Richtungen durchführen zu können.

Der Zylinder 11, 11', 11'', 11''' ist über seine heb- und senkbare Kolbenstange 13, 13', 13'', 13''' mit einem Gehäuse 14, 14', 14'', 14''' verbunden. Das Gehäuse 14, 14', 14'', 14''' wird dabei von der Kolbenstange 13, 13', 13'', 13''' durchragt und von dem dem Zylinder 11, 11', 11'', 11''' abgewandten Ende 15, 15', 15'', 15''' seitlich übergriffen. Das Ende 15, 15', 15'', 15''' weist dabei bzw. ist mit einem Schleifkontakt 16, 16', 16'', 16''' für ein seitlich am Gehäuse angeordnetes Linearpotentiometer 17, 17', 17'', 17''' verbunden.

Die Gehäuse 14, 14', 14'', 14''' sind an ihrer den Profilen 6, 7, 8, 9 zugewandten Seite jeweils mit einem an dem Gehäuse festgelegten Profilanschlag 18, 18', 18'', 18''' versehen, der jeweils zum Ausrichten und Zentrieren zweier Profile in den Zwischenraum zwischen den Enden bzw. Stirnseiten der Profile einragt. Da die erfindungsgemäße Vorrichtung 1 beim in Fig. 1 dargestellten Ausführungsbeispiel bereits ihre Sollstellung direkt vor dem Ausrichten und Zentrieren sowie Vermessen der Profile erreicht hat, sind die Profilanschläge 18, 18', 18'', 18''' bei korrekter Profillänge gleichmäßig beabstandet zu den jeweiligen Stirnseiten der durch sie auszurichtenden Profile in deren Zwischenraum angeordnet.

Die Kolbenstangen 13, 13', 13'', 13''' sind innerhalb der zugehörigen Gehäuse 14, 14', 14'', 14''' verschiebbar gelagert, wobei jede Kolbenstange jeweils von einem Bund 19, 19', 19'', 19''' umgeben ist, mittels dessen sie verschiebbar im Gehäuse abgestützt ist. Die Kolbenstange 13, 13', 13'', 13''' ist dabei jeweils beidseits des sie umgebenden Bundes 19, 19', 19'', 19''' von sich am Bund abstützenden Druckfedern 20, 20', 20'', 20''' sowie 21, 21', 21'', 21''' umgeben, wobei sich jeweils an einem Bund, beispielsweise 19, eine Druckfeder 20 und 21 abstützen. Die Druckfedern 20, 20', 20'', 20''' der Zentriereinrichtungen 10, 10', 10'', 10''' weisen jeweils die gleiche Federkonstante auf. Gleiches gilt für die Druckfedern 21, 21', 21'', 21''' der Zentriereinrichtungen 10, 10', 10'', 10'''. Ohne Druckbeaufschlagung des Zylinders 11, 11', 11'', 11''' befindet sich der Bund 19, 19', 19'', 19''' im wesentlichen mittig innerhalb des zugehörigen Gehäuses 14, 14', 14'', 14'''.

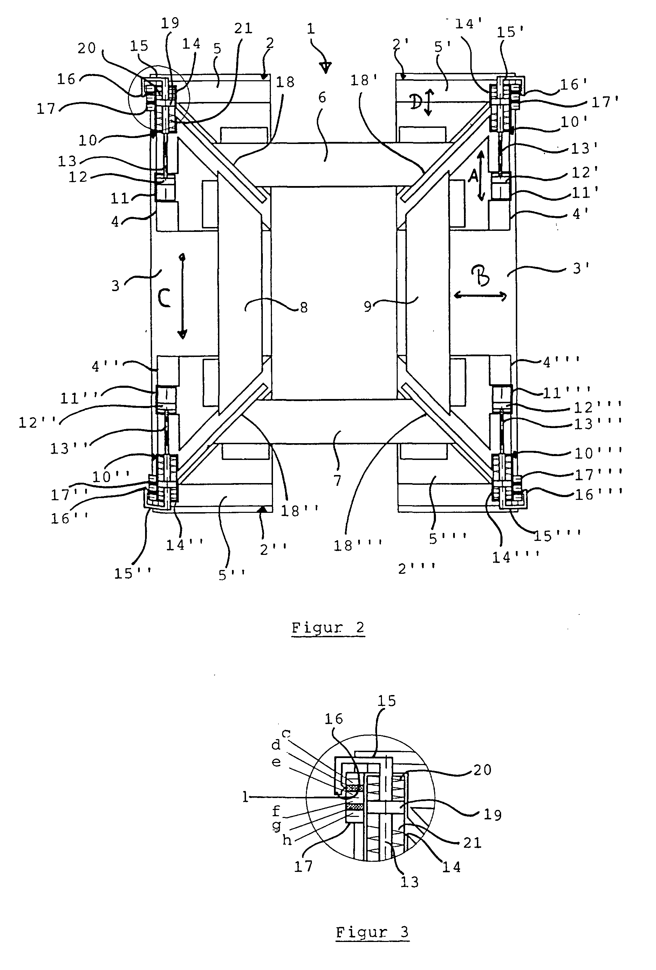

Wie aus den Fig. 1 und 2 weiterhin ersichtlich ist, können sich die Profilanschläge 18, 18', 18'', 18''' durch Druckbeaufschlagung der Zylinder 11, 11', 11'', 11''' in Richtung des Doppelpfeiles A verlagern, so daß sie abwechselnd an den Stirnflächen der beiden zum jeweiligen Schweißaggregat gehörenden Profile zur Ausrichtung und Zentrierung derselben zur Anlage gelangen.

Die Linearpotentiometer 17, 17', 17'', 17''' sind jeweils mit zumindest einer nicht dargestellten Einrichtung zur Auswertung und Verarbeitung der an ihnen abgegriffenen Widerstandswerte und zur Ausgabe von Fehlermeldungen verbunden.

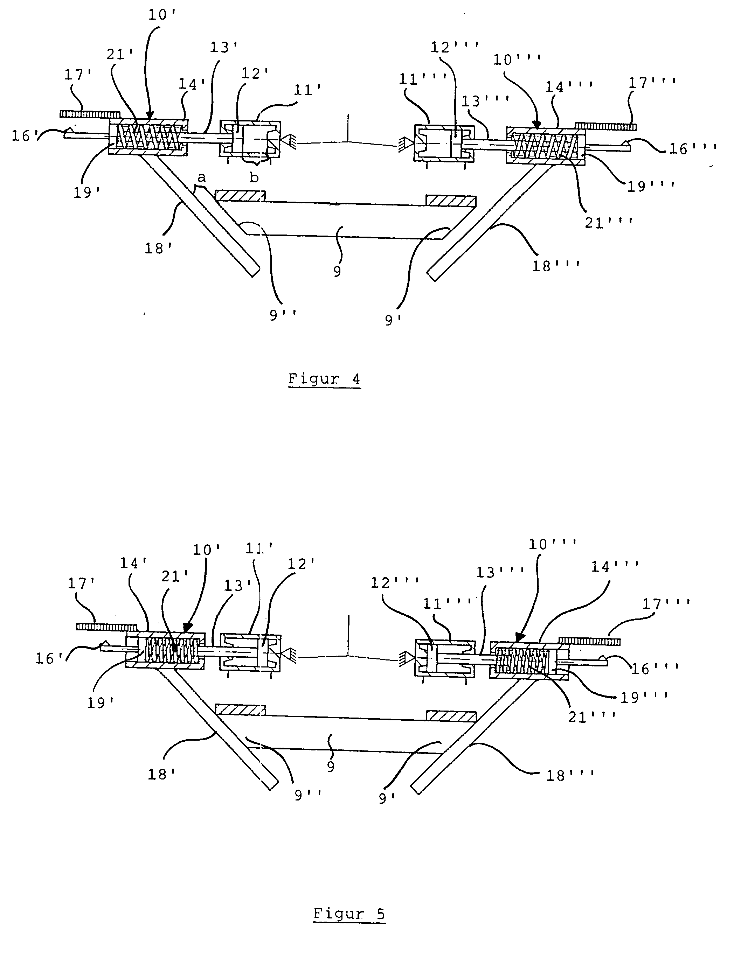

Die Funktionsweise der Zentriereinrichtung 10, 10', 10'', 10''' mit Meßeinrichtung (16 bis 16''' und 17 bis 17''') wird anhand der in den Fig. 4 und 5 gezeigten Prinzipdarstellung näher erläutert. Dabei werden für gleiche Bauteile die gleichen Bezugszeichen wie in den Fig. 1 bis 3 verwendet.

Nachdem die Profile in die Vorrichtung 1 eingelegt sind, wird diese mittels des beweglichen Aggregatträgers 3' sowie der beweglichen Schweißaggregate 2, 2' und gegebenenfalls der beweglichen Schlitten 5, 5', 5'', 5''' in ihre Sollstellung gefahren. Diese Sollstellung ist dabei in Fig. 1 dargestellt. Der Ausricht-, Zentrier- und Vermeßvorgang wird nachfolgend anhand des Profils 9 erläutert, wobei dieser Vorgang simultan auch beim gegenüberliegenden Profil 8 erfolgt. Des weiteren sind zur Erläuterung die Druckfedern 20, 20', 20'', 20''' in den Fig. 4 und 5 weggelassen, und der Kolben 12', 12''' der Zylinder 11', 11''' befindet sich ohne Druckbeaufschlagung des Zylinders in seiner obersten Stellung, obwohl er sich tatsächlich, wie auch Fig. 1 zu entnehmen ist, in seiner Mittelstellung im Zylinder befindet. Entsprechend sei darauf hingewiesen, daß die Fig. 4 und 5 lediglich zur Erläuterung der Erfindung dienen und diese in keiner Weise einschränken.

Hat nun die Vorrichtung 1 mit ihren Schweißaggregaten ihre Sollstellung erreicht, so werden alle Pneumatikzylinder an allen vier Ecken der Vorrichtung 1 gleichzeitig mit gleichem Druck beaufschlagt, damit ein gleicher definierter Hub erfolgt. Die Beaufschlagung erfolgt dabei derart, daß entweder alle Kolbenstangen in der Ebene der Aggregatträger 3, 3' angehoben oder aber gesenkt werden. Auf diese Weise werden entweder die einander gegenüberliegenden, auf den beweglichen Schlitten angeordneten Profile ausgerichtet, zentriert und vermessen oder aber diejenigen auf den ortsfesten Schlitten.

Bei der in Fig. 4 dargestellten Ausgangslage befinden sich nun die Kolben 12', 12''' der Zylinder 11', 11''' in ihrer Ausgangslage vor Druckbeaufschlagung. Um das Profil 9 nun auszurichten, zu zentrieren und zu vermessen, werden die Zylinder 11', 11''' mit gleichem Druck derart beaufschlagt, daß sich die Kolben 12', 12''' innerhalb des Zylinders 11', 11''' absenken. Wie ein Vergleich der Fig. 4 und 5 zeigt, ist dabei der Hub b des Kolbens 12' größer als der Abstand a zwischen dem Profilanschlag 18' und dem Ende 9'' des Profils 9. Die Gehäuse 14', 14''' werden nun durch die Bewegung der Kolbenstangen 13', 13''' in Richtung der Enden 9'', 9' des Profils 9 unter Mitnahme der Profilanschläge 18', 18''' bewegt. Die Bewegung der Gehäuse 14', 14''' erfolgt dabei über die Druckfedern 21', 21''' sowie den Bund 19', 19''', welche mit den Kolbenstangen 13', 13''' verbunden sind bzw. mit diesen zusammenwirken. In Fig. 5 haben nun die Kolben 12', 12''' der Zylinder 11', 11''' ihre Endstellung erreicht. Die Profilanschläge 18', 18''' liegen an den Stirnflächen der Enden 9'', 9' des Profils 9 an. Dadurch, daß der Hub b des Zylinders 11', 11''' größer als der Abstand a zwischen Profilanschlag und Profil bei Sollänge des Profils 9 ist, werden die Druckfedern 21', 21''' bei Sollänge etwas zusammengedrückt, wie aus Fig. 5 ersichtlich ist. Dieser Mehrweg der Kolbenstange 13', 13''' kann über den Schleifkontakt 16', 16''' und damit dessen Widerstandsabgriff am am Gehäuse 14', 14''' angeordneten Linearpotentiometer 17', 17''' erfaßt werden. Der Sollweg bei optimaler Profillänge sowie die zulässige Längentoleranz kann dabei entsprechenden Widerstandswerten zugeordnet werden, so daß die Profile vermessen und mit Vorgabewerten verglichen werden können. Liegt das Profil 9 außerhalb dieses Toleranzbereiches, so kann eine entsprechende Meldung darüber erfolgen, ob das Profil zu lang oder zu kurz ist. Dies ist dadurch möglich, daß die Druckfedern 21', 21''' bei zu langem Profil 9 stärker zusammengedrückt werden, sich also die Kolbenstange 13', 13''' gegenüber dem Gehäuse 14', 14''' und damit dem Linearpotentiometer 17', 17''' stärker in Richtung des Zylinders 11', 11''' verschiebt, während bei zu kurzem Profil 9 genau der gegenteilige Fall eintritt.

Dadurch, daß das Profil 9 zwischen den beiden Federn 21', 21''' gleicher Federrate eingeklemmt ist, wird das Profil 9 immer zu den Schweißaggregaten zentriert. Durch Vergleichen der Wege der Linearpotentiometer an allen Schweißaggregaten kann dabei die Zentriergenauigkeit der Profile relativ zur Vorrichtung 1 gesehen ermittelt werden. Eine Abweichung kann dabei auch eine entsprechende Fehlermeldung zur Folge haben.

In Fig. 2 befinden sich die Kolben 12, 12', 12'', 12''' in ihrer zu den Fig. 4 und 5 entgegengesetzten Endstellung, um nun die Profile 6, 7 zu zentrieren und zu vermessen. Wie dabei aus Fig. 2 ersichtlich ist, liegen die Profilanschläge dabei jeweils an den Enden der einander gegenüberliegenden Profile an. Entsprechend können diese Profile, hier 6 und 7, hinsichtlich ihrer Profillänge und Zentriergenauigkeit vermessen und verglichen werden. Während bei dem in Fig. 4 und 5 dargestellten Ausführungsbeispiel die Druckfedern 21, 21', 21'', 21''' zusammengedrückt werden, werden diese nun zum Zentrieren der Profile 6 und 7 gestreckt, während die gegenüberliegenden Druckfedern 20, 20', 20'', 20''' durch den jeweils zugehörigen Bund 19, 19', 19'', 19''' beaufschlagt und zusammengepreßt werden.

In dem in Fig. 3 dargestellten vergrößerten Ausschnitt aus Fig. 2 ist auf dem Linearpotentiometer 17 eine Art Meßskala zur Erläuterung der Profillängenmessung dargestellt. Die Skalenbereiche c, d, e sind dabei dem Profil 6 und die Bereiche f, g, h dem Profil 8 zuzuordnen. Befindet sich der Schleifkontakt 16 in der Mitte L des Linearpotentiometers, so befindet sich die Zentriereinrichtung 10 in ihrer Ruhestellung ohne Druckbeaufschlagung des Zylinders 11. Wird ein Profil 6 optimaler Profillänge sowie innerhalb eines zulässigen Längentoleranzbereiches zentriert und vermessen, so befindet sich der Schleifkontakt 16 im Skalenbereich d. Bei zu kurzem Profil 6 wird das Gehäuse 14 stärker angehoben, so daß die Feder 20 weniger stark zusammengedrückt wird und der Schleifkontakt 16 in den Bereich e der Meßskala gelangt. Bei zu langem Profil 6 verschiebt sich die Kolbenstange weiter aus dem Gehäuse 14 heraus, so daß der Schleifkontakt in den Bereich c gelangt. Wird das Profil 8 vermessen und zentriert, so gelangt der Schleifkontakt bei optimaler Profillänge in den Bereich g, während die Feder 21 bei zu kurzem Profil weniger stark gespannt wird, der Schleifkontakt also im Bereich f liegt und bei zu großem Profil im Bereich h. Auf diese Weise ist es möglich, mittels einer Zentriereinrichtung mit Meßeinrichtung jeweils eine Seite von zwei Profilen bezüglich ihrer Länge zu vermessen und anschließend durch Vergleich der Wege aller Linearpotentiometer an allen Schweißgeräten die Zentriergenauigkeit der Profile ebenfalls zu ermitteln.

## Patentansprüche

1. Vorrichtung zum Verbinden von Profilen aus Kunststoff, insbesondere für Fenster-, Blendrahmen oder dgl., durch Schweißen mit mindestens zwei, vorzugsweise vier Schweißaggregaten, die jeweils zwei Schlitten, einen ortsfesten und einen relativ hierzu verfahrbaren, und einen beweglichen Profilanschlag zum Ausrichten der eingelegten Profile aufweisen, dadurch gekennzeichnet, daß für jeden Profilanschlag (18, 18', 18'', 18''') eine am zugehörigen Schweißaggregat (2, 2', 2'', 2''') angeordnete, den Profilanschlag (18, 18', 18'', 18''') jeweils jedem der gegenüber dem Schweißaggregat (2, 2', 2'', 2''') auszurichtenden Profile (6, 7, 8, 9) einzeln zustellende und von diesem wegbewegende Zentriereinrichtung (10, 10', 10'', 10''') zum Zentrieren der Profile (6, 7, 8, 9) vorgesehen ist.

2. Vorrichtung nach Anspruch 1, dadurch gekennzeichnet, daß die Zentriereinrichtungen (10, 10', 10'', 10''') synchron betätigbar sind.

3. Vorrichtung nach Anspruch 1 oder 2, dadurch gekennzeichnet, daß jede Zentriereinrichtung (10, 10', 10'', 10''') einen Zylinder (11, 11', 11'', 11''') aufweist, der über seine heb- und senkbare Kolbenstange (13, 13', 13'', 13''') mit einem am Profilanschlag (18, 18', 18'', 18''') festgelegten Gehäuse (14, 14', 14'', 14''') verbunden ist.

4. Vorrichtung nach Anspruch 3, dadurch gekennzeichnet, daß der Zylinder (11, 11', 11'', 11''') pneumatisch beaufschlagt ist.

5. Vorrichtung nach Anspruch 3 oder 4, dadurch gekennzeichnet, daß der Zylinder (11, 11', 11'', 11''') am ortsfesten Schlitten (4, 4', 4'', 4''') festgelegt ist.

6. Vorrichtung nach einem der Ansprüche 3 bis 5, dadurch gekennzeichnet, daß die Kolbenstange (13, 13', 13'', 13''') innerhalb des Gehäuses (14, 14', 14'', 14''') durch einen sie umgebenden Bund (19, 19', 19'', 19''') verschiebbar abgestützt ist.

7. Vorrichtung nach Anspruch 6, dadurch gekennzeichnet, daß die Kolbenstange (13, 13', 13'', 13''') beidseits des Bundes (19, 19', 19'', 19''') von sich am Bund abstützenden Druckfedern (20, 20', 20'', 20''', 21, 21', 21'', 21''') umgeben ist.

8. Vorrichtung nach Anspruch 7, dadurch gekennzeichnet, daß die auf der dem Zylinder (11, 11', 11'', 11''') abgewandten Seite des Bundes (19, 19', 19'', 19''') angeordneten Druckfedern (20, 20', 20'', 20''') aller Zentriereinrichtungen (10, 10', 10'', 10''') zum die gleiche Federkonstante aufweisen.

9. Vorrichtung nach Anspruch 7 oder 8, dadurch gekennzeichnet, daß die auf der dem Zylinder (11, 11', 11'', 11''') zugewandten Seite des Bundes (19, 19', 19'', 19''') angeordenten Druckfedern (21, 21', 21'', 21''') aller Zentriereinrichtungen (10, 10', 10'', 10''') die gleiche Federkonstante aufweisen.

10. Vorrichtung nach einem der vorangehenden Ansprüche, dadurch gekennzeichnet, daß der Bund (19, 19', 19'', 19''') ohne Druckbeaufschlagung des Zylinders (11, 11', 11'', 11''') in etwa mittig im Gehäuse (14, 14', 14'', 14''') angeordnet ist.

11. Vorrichtung nach einem der vorangehenden Ansprüche, dadurch gekennzeichnet, daß sich der Kolben (12, 12', 12'', 12''') des Zylinders (11, 11', 11'', 11''') ohne Druckbeaufschlagung des Zylinders in seiner Mittellage im Zylinder befindet.

12. Vorrichtung nach einem der vorangehenden Ansprüche, dadurch gekennzeichnet, daß der Abstand (a) zwischen den Profilen (9) und Profilanschlägen (18') in der Sollmaßstellung der Vorrichtung (1) vor dem Ausrichten der Profile (9) ohne Druckbeaufschlagung des Zylinders (11') geringer als der Hub (b) des Kolbens (12') bei Druckbeaufschlagung ist.

13. Vorrichtung nach einem der vorangehenden Ansprüche, dadurch gekennzeichnet, daß die Kolbenstange (13 bis 13''') das Gehäuse (14 bis 14''') durchragt.

14. Vorrichtung nach einem der vorangehenden Ansprüche, dadurch gekennzeichnet, daß die Zentriereinrichtungen eine Meßeinrichtung (16 bis 16''', 17 bis 17''') zum Messen der Zentriergenauigkeit und Profillänge aufweisen.

15. Vorrichtung nach Anspruch 13 und 14, dadurch gekennzeichnet, daß die Meßeinrichtung (16 bis 16''', 17 bis 17''') durch ein Linearpotentiometer (17 bis 17''') mit einem mit dem dem Zylinder (11 bis 11''') abgewandten Ende (15 bis 15''') der Kolbenstange (13 bis 13''') verbundenen Schleifkontakt (16 bis 16''') gebildet ist.

16. Vorrichtung nach Anspruch 15, dadurch gekennzeichnet, daß das Linearpotentiometer (17 bis 17''') am Gehäuse (14 bis 14''') festgelegt ist.

17. Vorrichtung nach Anspruch 15 oder 16, dadurch gekennzeichnet, daß die Linearpotentiometer (17 bis 17''') aller Schweißaggregate mit zumindest einer Einrichtung zur Auswertung und Verarbeitung der gemessenen Daten und zur Ausgabe von Fehlermeldungen verbunden ist.

18. Vorrichtung nach einem der vorangehenden Ansprüche, dadurch gekennzeichnet, daß bei vier Schweißaggregaten (2 bis 2''') jeweils zwei auf einem von zwei parallel zueinander angeordneten Aggregatträgern (3, 3') angeordnet sind, wobei jeweils ein Schweißaggregat (2, 2') eines Paares relativ zum anderen (2'', 2''') auf dem Aggregatträger (3, 3') und ein Aggregatträger (3') relativ zum anderen Träger (3) verstellbar sind.

19. Vorrichtung nach einem der vorangehenden Ansprüche, dadurch gekennzeichnet, daß jedes Schweißaggregat ein zwischen die Stirnflächen zweier zu verbindender Profile einführbares Heizschwert aufweist.

20. Vorrichtung nach einem der vorangehenden Ansprüche, dadurch gekennzeichnet, daß jedes Schweißaggregat die miteinander zu verschweißenden Profile aufnehmende Spanneinheiten aufweist.

## Claims

1. Device for joining plastic profiles, particularly for window and blind frames or the like, by welding with at least two and preferably four welding units, which in each case have two carriages, one fixed and one movable relative thereto, as well as a movable profile stop for orienting the inserted profiles, characterized in that for each profile stop (18, 18', 18", 18''') is provided a centring device (10, 10', 10", 10"") for centring the profiles (6, 7, 8, 9) and which is placed on the associated welding unit (2, 2', 2", 2''') individually infeeding and moving away with respect to the profile stop (18, 18', 18", 18"') in each case each of the profiles (6, 7, 8, 9) to be oriented with respect to the welding unit (2, 2', 2", 2"').

2. Device according to claim 1, characterized in that the centring devices (10, 10', 10", 10"') are synchronously operable.

3. Device according to claim 1 or 2, characterized in that each centring device (10, 10', 10", 10"') has a cylinder (11, 11', 11", 11'"), which is connected by means of its raisable and lowerable piston rod (13, 13', 13", 13''') to a casing (14, 14', 14", 14''') fixed on the profile stop (18, 18', 18", 18''')

4. Device according to claim 3, characterized in that the cylinder (11, 11', 11", 11"') is pneumatically operated.

5. Device according to claim 3 or 4, characterized in that the cylinder (11, 11', 11", 11''') is fixed on the fixed carriage (4, 4', 4", 4"').

6. Device according to one of the claims 3 to 5, characterized in that the piston rod (13, 13', 13", 13"') is displaceably supported within the casing (14, 14', 14", 14"') by a collar (19, 19', 19", 19"') surrounding it.

7. Device according to claim 6, characterized in that on either side of the collar (19, 19', 19'', 19'''), the piston rod (13, 13', 13'', 13''') is surrounded by compression springs (20, 20', 20", 20"', 21, 21', 21", 21'') supported on the collar.

8. Device according to claim 7, characterized in that the compression springs (20, 20', 20", 20''') of all the centring devices (10, 10', 10", 10''') placed on the side of the collar (19, 19', 19", 19"') remote from the cylinder (11, 11', 11", 11"') have the same spring constant.

9. Device according to claim 7 or 8, characterized in that the compression springs (21, 21', 21", 21''') of all the centring devices (10, 10', 10", 10''') on the side of the collar (19, 19', 19", 19''') facing the cylinder (11, 11', 11", 11''') have the same spring constant.

10. Device according to one of the preceding claims, characterized in that the collar (19, 19', 19", 19"') is positioned approximately centrally in the casing (14, 14', 14", 14"') without pressurizing the cylinder (11, 11', 11", 11''').

11. Device according to one of the preceding claims, characterized in that the piston (12, 12', 12", 12''') of the cylinder (11, 11', 11'', 11'') is located in its central position in the cylinder without pressurizing the latter.

12. Device according to one of the preceding claims, characterized in that the spacing (a) between the profiles (9) and profile stops (18') in the specified size position of the device (1) prior to the orientation of the profiles without pressurizing the cylinder (11') is smaller than the stroke (b) of the piston (12') on pressurization.

13. Device according to one of the preceding claims, characterized in that the piston rod (13 to 13''') projects through the casing (14 to 14"').

14. Device according to one of the preceding claims, characterized in that the centring devices have a measuring device (16 to 16''', 17 to 17"') for measuring the centring precision and profile length.

15. Device according to claim 13 and 14, characterized in that the measuring device (16 to 16"', 17 to 17"') is formed by a linear potentiometer (17 to 17"') with a sliding contact (16 to 16"') connected to the end (15 to 15"') of the piston rod (13 to 13"') remote from the cylinder (11 to 11"').

16. Device according to claim 15, characterized in that the linear potentiometer (17 to 17"') is fixed on the casing (14 to 14''').

17. Device according to claim 15 or 16, characterized in that the linear potentiometer (17 to 17"') of all the welding units is connected to at least one device for evaluating and processing the measured data and for outputting error messages.

18. Device according to one of the preceding claims, characterized in that in the case of four welding units (2 to 2"') in each case two are arranged on one of two parallel unit supports (3, 3') and in each case one welding unit (2, 2') of a pair is adjustable relative to the other (2", 2"') on the unit support (3, 3') and one unit support (3') is adjustable relative to the other support (3).

19. Device according to one of the preceding claims, characterized in that each welding unit has an electrode bar insertable between the end faces of two profiles to be connected.

20. Device according to one of the preceding claims, characterized in that each welding unit has clamping units receiving the profiles to be welded together.

## Revendications

1. Dispositif pour relier des profilés en matière plastique, en particulier des cadres de fenêtres, des dormants ou similaires, par soudage au moyen d'au moins deux, de préférence quatre ensembles de soudage, présentant chacun deux coulisseaux, l'un fixe et l'autre déplaçable par rapport au premier, et une butée de profilé mobile pour aligner les profilés chargés, caractérisé en ce qu'il est prévu, pour chaque butée (18,18',18'',18''') un dispositif de centrage (10,10',10'',10''') pour le centrage des profilés (6,7,8,9), dispositif monté sur l'ensemble de soudage (2,2',2",2"') correspondant, amenant individuellement chaque butée de profilé (18,18',18'',18''') à chacun des profilés (6,7,8,9) à aligner en face de l'ensemble de soudage (2,2',2'',2''') et l'en éloignant.

2. Dispositif selon la revendication 1, caractérisé en ce que les dispositifs de centrage (10,10',10'',10''') sont actionnés en synchronisme.

3. Dispositif selon la revendication 1 ou 2, caractérisé en ce que chaque dispositif de centrage (10,10',10'',10''') présente un vérin (11,11',11'',11''') relié par sa tige de piston de poussée et de retrait (13,13',13'',13''') à un carter (14,14',14'',14''') fixé à la butée de profilé (18,18',18'',18''').

4. Dispositif selon la revendication 3, caractérisé en ce que le vérin (11,11',11'',11''') est rappelé pneumatiquement.

5. Dispositif selon la revendication 3 ou 4, caractérisé en ce que le vérin (11,11',11'',11''') est fixé au coulisseau immobilisé (4,4',4'',4''').

6. Dispositif selon l'une quelconque des revendications 3 à 5, caractérisé en ce que la tige de piston (13,13',13'',13''') coulisse à l'intérieur du carter (14,14',14'',14''') en s'appuyant sur une nervure périmétrique (19,19',19'',19''') qui l'entoure.

7. Dispositif selon la revendication 6, caractérisé en ce que la tige de piston (13,13',13'',13''') est entourée de part et d'autre de la nervure périmétrique (19,19',19'',19''') par des ressorts de compression (20,20',20'',20''', 21,21',21'',21''') s'appuyant sur la nervure périmétrique.

8. Dispositif selon la revendication 7, caractérisé en ce que les ressorts de compression (20,20',20'',20''') de tous les dispositifs de centrage (10,10',10'',10'''), disposés sur la face de la nervure périmétrique (19,19',19'',19''') opposée au vérin (11,11',11'',11'''), présentent la même constante de rappel.

9. Dispositif selon la revendication 7 ou 8, caractérisé en ce que les ressorts de compression (21,21',21'',21''') de tous les dispositifs de centrage (10,10',10'',10'''), disposés sur la face de la nervure périmétrique (19,19',19'',19''') en regard du cylindre (11,11',11'',11'''), présentent la même constante de rappel.

10. Dispositif selon l'une quelconque des revendications précédentes, caractérisé en ce que la nervure périmétrique (19,19',19'',19'''), en l'absence de mise en pression du vérin (11,11',11'',11''') est disposée environ au milieu du carter (14,14',14'',14''').

11. Dispositif selon l'une quelconque des revendications précédentes, caractérisé en ce que le piston (12,12',12'',12''') du vérin (11,11',11'',11''') se trouve, en l'absence de mise en pression du vérin , dans sa position médiane dans le vérin.

12. Dispositif selon l'une quelconque des revendications précédentes, caractérisé en ce que la distance (a) entre les profilés (9) et les butées de profilés (18') dans la position de cote de consigne du dispositif (1) avant l'alignement des profilés (9) en l'absence de mise en pression du vérin est inférieure à la course (b) du piston (12') en cas de mise en pression.

13. Dispositif selon l'une quelconque des revendications précédentes, caractérisé en ce que la tige de piston (13 à 13''') traverse le carter (14 à 14''').

14. Dispositif selon l'une quelconque des revendications précédentes, caractérisé en ce que le dispositif de centrage présente un dispositif de mesure (16 à 16''', 17 à 17'') pour mesurer l'exactitude du centrage et la longueur des profilés.

15. Dispositif selon la revendication 13 ou 14, caractérisé en ce que le dispositif de mesure (16 à 16''', 17 à 17''') consiste en un potentiomètre linéaire (17 à 17''') présentant un contact par frottement (16 à 16''') relié à l'extrémité (15 à 15''') de la tige de piston (13 à 13''') opposée au vérin (11 à 11''').

16. Dispositif selon la revendication 15, caractérisé en ce que le potentiomètre linéaire (17 à 17''') est fixé au carter (14 à 14''').

17. caractérisé en ce que selon la revendication 15 ou 16, caractérisé en ce que le potentiomètre linéaire (17 à 17''') de tous les ensembles de soudage est relié à au moins un dispositif d'analyse et de traitement des données mesurées et pour l'édition de messages d'erreurs.

18. Dispositif selon l'une quelconque des revendications précédentes, caractérisé en ce que dans le cas de quatre ensembles de soudage (2 à 2'''), deux ensembles sont à chaque fois disposés sur l'un des deux supports d'ensembles (3,3') disposés parallèles l'un à l'autre, un ensemble de soudage (2,2') d'une paire pouvant à chaque fois être positionné par rapport à l'autre (2'',2''') et un support d'ensemble (3') pouvant à chaque fois être positionné par rapport à l'autre support (3).

19. Dispositif selon l'une quelconque des revendications précédentes, caractérisé en ce que chaque ensemble de soudage présente une lame chauffante pouvant être introduite entre les faces frontales de deux profilés à solidariser.

20. Dispositif selon l'une quelconque des revendications précédentes, caractérisé en ce que chaque ensemble de soudage présente des dispositifs de serrage recevant les profilés à solidariser.
